(19) Europäisches Patentamt

European Patent Office

Office européen des brevets

(11) Publication number: **0 160 541**
**B1**

(12) **EUROPEAN PATENT SPECIFICATION**

(45) Date of publication of patent specification: **28.06.89**   (51) Int. Cl.⁴: **B 60 C 11/12**

(21) Application number: **85302967.6**

(22) Date of filing: **26.04.85**

(54) Pneumatic tires.

(30) Priority: **02.05.84 JP 87799/84**

(43) Date of publication of application:
**06.11.85 Bulletin 85/45**

(45) Publication of the grant of the patent:
**28.06.89 Bulletin 89/26**

(84) Designated Contracting States:
**BE DE FR GB SE**

(56) References cited:
**AU-B- 488 901**
**GB-A-2 056 925**
**US-A-3 954 130**
**US-A-4 078 596**

(73) Proprietor: **Bridgestone Corporation
10-1, Kyobashi 1-Chome Chuo-Ku
Tokyo 104 (JP)**

(72) Inventor: **Matsuda, Hideki
23, Takamatsu 2-chome
Toshima-ku Tokyo (JP)**
Inventor: **Takahashi, Hidenori
555-86, Kamihirose
Sayama City Saitama Pref. (JP)**

(74) Representative: **Whalley, Kevin et al
MARKS & CLERK 57/60 Lincoln's Inn Fields
London WC2A 3LS (GB)**

EP 0 160 541 B1

Courier Press, Leamington Spa, England.

EP 0 160 541 B1

**Description**

This invention relates to pneumatic tires, and more particularly to pneumatic tires usually used for the smooth running of automative vehicles inclusive of trucks and buses, particularly such vehicles driven under high loading. The invention in particular relates to the tread pattern of the pneumatic tire having improved wet performance.

Generally speaking, there have hitherto been known the following measures for the improvement of wet performance, but such measures have disadvantages as mentioned below.

1. A rubber having a high content of SBR is used as a tread rubber. This brings about degradation of heat build-up performance and is generally restricted in application to high-speed running or heavy load tires.

2. The drainage ability is enhanced by enlargement of the groove width or increase of the number of grooves. This is accompanied with a reduction of rigidity of the tread ribs and cannot avoid the degradation of wear performance.

3. Sipes are arranged in the ribs. This produces a cutting action to water streams based on an edge effect in the ground contact area of the tread, but it is difficult to simultaneously obtain the required cornering property and braking or traction property.

AU—A—488901 describes a particular pneumatic tire having a tread of a rib type pattern according to the preamble of claim 1.

The present invention aims to provide pneumatic tires having improved wet performance and adequate balance between the cornering property and the breaking or traction property without degrading the wear properties, by providing an appropriate and functional arrangement of the sipes.

According to the invention, there is provided a pneumatic tire having improved wet performance, having a tread of a rib type pattern divided into at least three ribs by at least two circumferential grooves so that the tread defines both side regions and the remaining central region by a pair of said circumferential grooves arranged close to both side ends of the tread and is provided at each region with blind sipes, with first sipes arranged in both side regions being inclined at a small first angle of not more than 40° with respect to the circumferential line of the tire and with second sipes arranged in the remaining central region being inclined at a second angle with respect to the transverse line of the tire, characterised in that in every tread region all of its sipes have the same inclination angle, that the said sipes in each tread region are alternately inclined in opposite directions along the circumferential line of the tire, and that the second inclination angle of the second sipes is not more than 40°.

As used herein and illustrated in the drawing, the term "blind sipes" means sipes that are separated and discontinuous in the circumferential and transverse directions of the tread and both ends of each sipe are not open at the tread end or the circumferential groove.

According to the invention, the blind sipes in each region are alternately inclined in opposite directions along the circumferential or transverse line of the tire, and also the inclination angle is not more than 40°, preferably not more than 35°.

Further, the sipe preferably has a depth corresponding to at least 25% of the depth of the circumferential groove adjoining the sipe-containing rib.

Moreover, the sipes are preferably arranged at a sipe arrangement density, expressed as a ratio of the total projected area of the sipes on a plane including a circumferential or transverse line of the tire to a product of the whole surface area of the ribs in each region and the depth of the circumferential groove defining the side region and central region, of 0.0045—0.45 cm$^{-1}$, more preferably 0.02—0.1 cm$^{-1}$ in the both side regions, and 0.01—0.6 cm$^{-1}$, more preferably 0.15—0.30 cm$^{-1}$, in the remaining central region.

The invention will be further described, by way of example only, with reference to the accompanying drawings, wherein:

Figs. 1a and 1b are a schematical sectional view and developed view of the main part of the tread of an embodiment of a pneumatic tire according to the invention; and

Fig. 2 is a developed view of the tread pattern of an embodiment tire according to the invention.

In general, it is well-known that the edge effect of so-called sipes arranged in each of three or more ribs, which are divided in the tire tread by at least two circumferential grooves, can contribute to improve wet performance of a tire. The term "sipe" used herein usually means a cut cleaved in the tread at such a narrow gap of about 0.5—1.5 mm that the opposed ends are substantially closed to each other at the ground contact area.

Heretofore, such sipes have usually been arranged in the ribs or blocks of a tread defined by two or several circumferential grooves or further transverse grooves crossing therewith. In this case, these sipes have been arranged at substantially the same inclination angle in the ribs or blocks over the whole of the tread. That is, it has not been considered what role is to be played by each of the different sipes arranged in the different position in the tread in which the respective rib or block is located.

The present inventors have therefore made studies with respect to the sipe arrangement and found that when the sipes are arranged at a small inclination angle with respect to the transverse line of the tire, the braking and traction properties among the wet performance characteristics are effective but the cornering property is poor due to a tendency of decreasing the rib rigidity, while when the sipes are arranged at a small inclination angle with respect to the circumferential line of the tire, the cornering

2

property is effective but the braking and traction properties are poor. Based on this knowledge, the invention aims to simultaneously provide satisfactory wet performance characteristics by considering the arrangement of sipes varied in accordance with the position of the rib in the tread.

The term "transverse line of the tire" used herein means an intersection line of a plane including the rotational axis of the tire with the outer surface of the tread, and the term "circumferential line of the tire" means an intersection line of a plane perpendicular to the aforementioned plane with the outer surface of the tread.

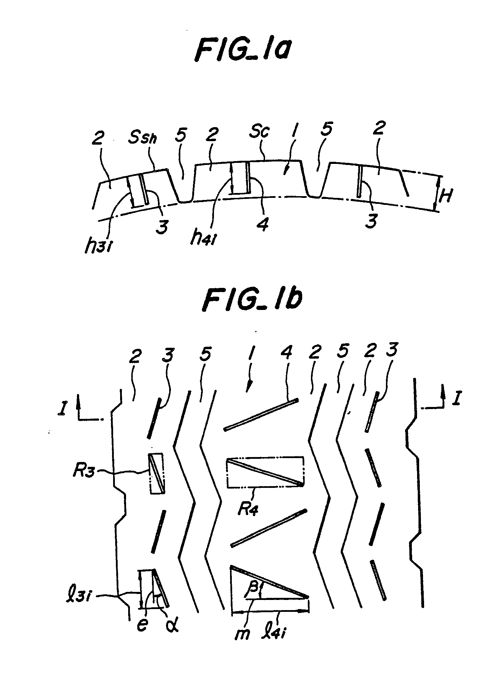

In Fig. 1 is shown a tread 1 having a rib type pattern defined with two circumferential grooves 5 and three ribs 2. In Figs. 1a and 1b, sipes 3 are provided in the outer ribs, and sipes 4 are provided in the central rib.

Although the circumferential grooves 5 are illustrated in the form of zigzag grooves, they may be straingt grooves extending parallel with the circumferential line of tire or odd-shaped zigzag grooves extending in the form of a wave or provided with a parallel or straight part or a notch. The width of the circumferential groove is about 3 to 8% of the tread width as measured between the opposed groove walls in a direction perpendicular to the groove wall. Moreover, the rib 2 may be cut by shallow or narrow transverse grooves or similar members (not shown).

In the illustrated embodiment, the tread 1 is divided into three ribs 2 by the two circumferential grooves 5. In general, the number of the ribs corresponds to a value obtained by adding 1 to the number of the circumferential grooves. The tread 1 defines both side regions Ssh and remaining central region Sc by a pair of circumferential grooves 5 arranged close to both side ends of the tread 1.

In both side regions Ssh, each of the sipes 3 is arranged at an inclination angle $\alpha$ of not more than 40°, preferably not more than 35°, with respect to the circumferential line $e$ of the tire, while each of the sipes 4 in the remaining central region Sc is arranged at an inclination angle $\beta$ of nore more than 40°, perferably not more than 35°, with respect to the trasverse line $m$ of the tire. Further, the sipes in each region are alternately inclined in opposite directions along the circumferential line $e$ of the tire.

Each of the sipes 3 and 4 is cleaved at such a gap of 0.5—1.5 mm that the opposed ends are closed to each other at the ground contact area of the tire, and has a length corresponding to at least 5 times the gap. The depths $h_{3l}$ and $h_{4l}$ of the sipes 3 and 4 should be at least 25% of the depth H of the circumferential groove 5, respectively.

Moreover, the sipes 3 in each of both side regions Ssh satisfy $0.0045 \text{ cm}^{-1} \leq \rho_3 \leq 0.45 \text{ cm}^{-1}$, preferably $0.02 \text{ cm}^{-1} \leq \rho_3 \leq 0.1 \text{ cm}^{-1}$, wherein $\rho_3$ is a ratio of total projected area of the sipes 3 on a plane including the circumferential line $e$ of the tire ($\Sigma^l l_{3l} \times h_{3l}$) to a product of whole surface area of rib in each of both side regions Ssh and groove depth H, while the sipes 4 in the remaining central region Sc satisfy $0.01 \text{ cm}^{-1} \leq \rho_4 \leq 0.6 \text{ cm}^{-1}$, preferably $0.15 \text{ cm}^{-1} \leq \rho_4 \leq 0.30 \text{ cm}^{-1}$, wherein $\rho_4$ is a ratio of total projected area of the sipes 4 on a plane including the transverse line of $m$ of the tire ($\Sigma_l l_{41} \times h_{4l}$) to a product of whole surface area of rib in the remaining central region Sc and groove depth H.

When each value of $\rho_3$ and $\rho_4$ exceeds the upper limit, the wear resistance is degraded due to the reduction of rib rigidity and the wet performance is deteriorated, while when it is less than the lower limit, the effect of enhancing the wet performance may not particularly be obtained.

The ground contact pressure distribution of the tread during usual straight-running is larger in the central region of the tread 1 than in the side region threof, while the ground contact pressure of the side region of the tread 1 subjected to side force during cornering considerably increases. That is, the side force opposed to centrifugal force acting on the vehicle during the cornering is born by the side region of the tread receiving such a force, while the braking or traction force acting on the tire during the straight-running is mainly born by the central region of the tread. In this connection, the individual inclination arrangement of the sipes 3 and 4 shown in Fig. 1b is to obtain sure ground contacting of the tire by cutting water film with edges of the sipes 3 and 4 under the action of the above forces.

In the arrangement of linear sipes shown in Fig. 1b, the inclination angle is defined by an intersecting angle to the circumferential line $e$ or transverse line $m$. The shape of the sipes 3 and 4 formed in the tread is dependent upon the tread design and may frequently be polygonal or wavy. In the latter case, the standard of the inclination angle of sipe is not necessarily clear. Therefore, assuming a minimum rectangle $R_3$ or $R_{4l}$ defined by the transverse line and circumferential line surrounding the sipe, the general inclination arrangement of the sipe is defined as an angle between the diagonal line of the rectangle and the circumferential line $e$ or transverse line $m$.

The invention is advantageously applicable to the enhancement of wet performances in heavy duty pneumatic radial tires for use in trucks, buses and the like among automotive vehicles.

The invention will be described in detail with reference to the following examples.

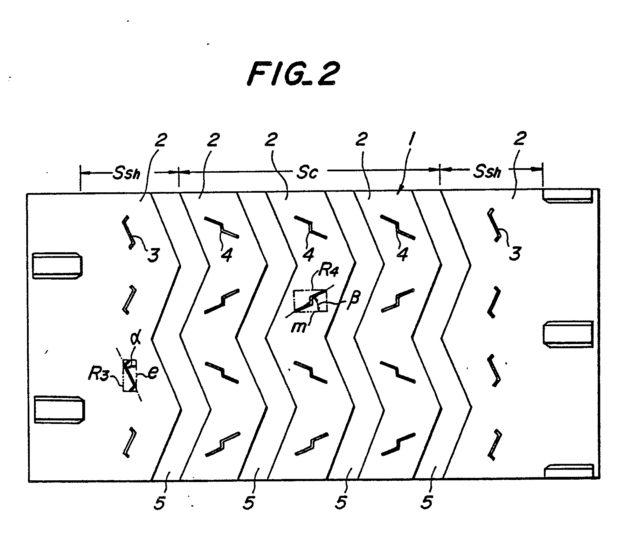

Four kinds of tires having a tire size of 11R 22.5 14PR were prepared by applying a zigzag rib type pattern defined by four circumferential grooves shown in Fig. 2 as follows.

Comparative Example A: no sipes

Comparative Example B: The sipes in both side regions Ssh and remaining central region Sc were arranged at alternate inclination angles of +30° and −30° with respect to the transverse line $m$ of the tire. $\rho_3 : 0.02 \text{ cm}^{-1}$, $\rho_4 : 0.20 \text{ cm}^{-1}$

Comparative Example C: The sipes in both side regions Ssh and remaining central region Sc were arranged at alternate inclination angles of +20° and −20° with respect to the circumferential line $e$ of the tire. $\rho_3 : 0.04 \text{ cm}^{-1}$, $\rho_4 : 0.08 \text{ cm}^{-1}$

Example: The sipes in both side regions Ssh were arranged at alternate inclination angles $\alpha$ of +20° and −20° with respect to the circumferential line $e$, while the sipes in the remaining central region Sc were arranged at alternate inclination angles $\beta$ of +30° and −30° with respect to the transverse line $m$. $\rho_3 : 0.04 \text{ cm}^{-1}$, $\rho_4 : 0.20 \text{ cm}^{-1}$

In these examples other than Comparative Example A, the gap of all sipes was 0.75 mm, while the depths $h_{3i}$ and $h_{4i}$ of the sipes 3 and 4 were 50% and 85% of the groove depth H, respectively.

Therefore, the tires of Comparative Examples B and C are quite different from the tire of the Example according to the invention in providing no individual inclination arrangement of sipes in both side regions Ssh or remaining central region Sc.

Each of these tires to be tested was subjected to actual running tests in acccordance with the following evaluations to obtain results shown in the following table by an index on the basis that the value of Comparative Example A be 100.

1. Braking property at wet state: reciprocal number of braking distance at 60 km/hr $(\text{cm}^{-1})$.

2. Cornering property at wet state: critical rotation speed (km/hr) when the speed is increased in the rotation at constant radius.

3. Wear resistance: running distance per unit worn quantity (km/mm) after actual running over a distance of 50,000 km.

| | Comparative Example | | | Example |
|---|---|---|---|---|
| | A | B | C | |
| Braking property at wet state | 100 | 110 | 100 | 108 |
| Cornering property at wet state | 100 | 102 | 110 | 108 |
| Wear resistance | 100 | 98 | 98 | 98 |

As apparent from the above table, the tire of Comparative Example B is good in the braking property at wet state as compared with Comparative Example A but the cornering property at wet state is hardly enhanced, while the tire of Comparative Example C is good in the cornering property at wet state but has no effect of enhancing the braking property at wet state. On the contrary, in the tire according to the invention, both the braking and cornering properties at wet state are considerably enhanced without substantially degrading the wear resistance.

According to the invention, both the braking or traction property and the cornering property on wet road are enhanced by arranging the sipes formed in the tread at such an inclination angle that the sipes in both side rib regions of the tread divided by a pair of circumferential grooves close to side ends of the tread and the sipes of the remaining central rib region are suitable to play respective roles.

**Claims**

1. A pneumatic tire having a tead (1) of a rib type pattern divided into at least three ribs (2) by at least two circumferential grooves (5) so that the tread defines both side regions (Ssh) and the remaining central region (Sc) by a pair of said circumferential grooves arranged clost to both side ends of the tread and is provided at each region with blind sipes (3, 4), with first sipes (3) arranged in both side regions (Ssh) being inclined at a small first angle ($\alpha$) of not more than 40° with resepct to the circumferential line ($e$) of the tire and with second sipes (4) being arranged in the remaining central region (Sc) being inclined at a second angle ($\beta$) with respect to the transverse line ($m$) of the tire, characterized in that in every tread region Ssh:Sc) all of its sipes (3; 4) have the same inclination angle ($\alpha$; $\beta$), that the said sipes in each tread region are alternately inclined in opposite directions along the said circumferential line of the tire, and that the second inclination angle ($\beta$) of the second sipes (4) is not more than 40°.

2. A pneumatic tire as claimed in claim 1, characterized in that the said sipes have a depth corresponding to at least 25% of the depth (H) of said circumferential groove adjoining the rib in which the said sipe is arranged.

3. A pneumatic tire as claimed in claim 1 or 2, characterized in that the said sipes are arranged at a sipe arrangement density, which is expressed as a ratio of total projected area of sipes on a plane including the circumferential or transverse line of the tire to a product of whole surface area of ribs in each region and depth of circumferential groove defining the said side region and central region, of 0.0045—0.45 $\text{cm}^{-1}$ in both side regions and 0.01—0.06 $\text{cm}^{-1}$ in the remaining central region, respectively.

**Patentansprüche**

1. Luftreifen mit einer Lauffläche (1) mit Rippenprofil, das durch zwei Umfangsnuten (5) in wenigstens drei Rippen (2) so unterteilt ist, daß die Lauffläche durch ein Paar der genannten, in geringem Abstand von beiden seitlichen Laufflächenenden angeordneten Umfangsnuten sowohl Seitenabschnitte (Ssh) als auch den übrigen Mittelabschnitt (Sc) bildet und in jedem Abschnitt mit feinen, schmalen Blindnuten (3, 4) versehen ist, wobei in beiden Seitenabschnitten (Ssh) angeordnete erste Blindnuten (3) unter einem ersten kleinen Winkel (α) von nicht mehr als 40° gegen die Umfangslinie (e) des Luftreifens geneigt sind und im übrigen Mittelabschnitt (Sc) angeordnete zweite Blindnuten (4) unter einem zweiten Winkel (β) gegen Querlinie (m) des Luftreifens geneigt sind, dadurch gekennzeichnet, daß in jedem Laufflächenabschnitt (Ssh, Sc) alle seine feinen, schmalen Nuten (3, 4) den gleichen Niegungswinkel (α, β) haben, daß die genannten feinen, schmalen Nuten in jedem Laufflächenabschnitt entlang der genannten Umfangslinie des Luftreifens abwechselnd in entgegengesetzten Richtungen geneigt sind, und daß der zweite Neigungswinkel (β) der zweiten Nuten (4) nicht mehr als 40° beträgt.

2. Luftreifen nach Anspruch 1, dadurch gekennzeichnet, daß die genannten feinen, schmalen Nuten von einer Tiefe sind, die wenigstens 25% der Tiefe (H) derjenigen Umfangsnut beträgt, die an die Rippe angrenzt, in welcher die geannte feine, schmale Nut angeordnet ist.

3. Luftreifen nach Anspruch 1 oder 2, dadurch gekennzeichnet, daß die genannten feinen, schmalen Nuten mit einer Nutenbesetzungsdichte angeordnet sind, welche ausgedrückt ist als das Verhältnis der geamten, auf eine durch die Umgangs- oder Querlinie des Luftreifens gehende Ebene projizierten Fläche der feinen, schmalen Nuten zum Produkt aus der gesamten Oberfläche der Rippen in jedem Abschnitt und der Tiefe der den genannten Seitenabschnitt und den Mittelabschnitt begrenzenden Umfangsnut, in Höhe von 0,0045—0,45 cm$^{-1}$ in beiden Seitenbaschnitten bzw. von 0,01—0,6 cm$^{-1}$ im übrigen Mittelabschnitt.

**Revendications**

1. Un bandage pneumatique présentant une bande de roulement (1) avec un motif du type à nervures, divisé dans au moins trois nervures (2) par au moins deux gorges périphériques (5) de sorte que la bande de roulement définit deux zones latérales (Ssh) et la zone centrale restante (Sc) par une paire desdites gorges périphériques agencées au voisinage immédiat des deux extrémités latérales de la bande de roulement et est pourvues dans chaque zone de saignées aveugles (3, 4), les premières saignées (3) agencées dans les deux zones latérales (Ssh) étant inclinées selon un premier angle aigu (α) ne dépassant pas 40°, par rapport à la ligne périphérique (e) du pneu tandis que les secondes saignées (4) agencées dans la zone centrale restante (Sc) étant inclinées selon un second angle (β) par rapport à la ligne transversale (m) du pneu, caractérisé en ce que dans chaque zone de la bande de roulement (Ssh; Sc) toutes ses saignées (3; 4) présentent le même angle d'inclinaison (α; β), que lesdites saignées dans chaque zone de la bande de roulement sont inclinées de façon alternative selon des directions opposées le long de ladite ligne périphérique du pneu, et que le second angle d'inclinaison (β) des secondes saignées (4) ne dépasse pas 40°.

2. Un bandage pneumatique tel que revendiqué dans la revendication 1, caractérisé en ce que lesdites saignées ont une profondeur correspondant à au moins 25% de la profondeur (H) de ladite gorge périphérique adjacente à la nervure dans laquelle ladite saignée est agencée.

3. Un bandage pneumatique tel que revendiqué dans la revendication 1 ou 2, caractérisé en ce que lesdites saignées sont agencées selon une densité de saignées dans l'agencement, qui est exprimée comme un rapport de la surface totale projetée des saignées sur un plan renfermant la ligen périphérique ou la ligne transversale du pneu à un produit de la surface totale des nervures dans chaque zone et de la profondeur de la gorge périphérique définissant lesdites régions latérales et régions centrales, de 0,0045—0,45 cm$^{-1}$ dans les deux régions latérales et de 0,01—0,6 cm$^{-1}$ dans la région centrale restante, respectivement.

## FIG_Ia

## FIG_Ib

## FIG. 2